**(19)** Europäisches Patentamt
European Patent Office
Office européen des brevets

**(11)** **EP 1 517 160 A2**

**(12)** **EUROPÄISCHE PATENTANMELDUNG**

**(43)** Veröffentlichungstag:
23.03.2005 Patentblatt 2005/12

**(51)** Int Cl.⁷: **G02B 5/02**, F21V 5/04

**(21)** Anmeldenummer: **04018197.6**

**(22)** Anmeldetag: **31.07.2004**

**(84)** Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

**(30)** Priorität: **20.09.2003 DE 10343630**

**(71)** Anmelder: **Schott AG**
**55122 Mainz (DE)**

**(72)** Erfinder:
- **Becker, Ralf**
**37581 Bad Gandersheim (DE)**
- **Kittelmann, Rüdiger**
**37574 Einbeck (DE)**
- **Kurek, Eberhard**
**37589 Kalefeld (DE)**
- **Wagener, Harry**
**31061 Alfeld (DE)**
- **Zirfas, Ulrich**
**37581 Bad Gandersheim (DE)**

**(54)** **Streuscheibe**

**(57)** Die Erfindung betrifft eine Streuscheibe, die einen transparenten Grundkörper mit einer ersten Oberfläche aufweist, wobei die erste Oberfläche in Facetten unterteilt ist, und bei der jeder Facette eine Erhebung oder Vertiefung mit einer zweiten, gewölbt ausgebildeten Oberfläche zugeordnet ist.

Es wird vorgeschlagen, dass die Facetten unterschiedliche geometrische Formen annehmen. Dies kann dadurch realisiert werden, dass

1. die jeweiligen Scheitelpunkte der Erhebungen oder Vertiefungen entlang einer Spirale angeordnet sind, oder
2. dass die Scheitelpunkte der Erhebungen und/ oder Vertiefungen dadurch charakterisiert sind, dass sich ihre Koordinaten $(x_S',y_S')$ aus den Koordinaten $(x_P,y_P)$ aller Punkte, welche eine Anordnung von Facetten mit regelmäßiger sechseckiger Randkontur definieren, durch Verdrehung um einen Winkel $\delta$ um ein Zentrum ergeben, oder dass
3. die Scheitelpunkte der Erhebungen oder Vertiefungen dadurch charakterisiert sind, dass sich ihre Koordinaten $(x_S'',y_S'')$, aus den Koordinaten $(x_P,y_P)$ aller Punkte, welche eine Anordnung von Facetten mit regelmäßiger sechseckiger Randkontur definieren, durch Zufallsvariierung mit Hilfe des Monte-Carlo-Verfahrens hervorgehen.

Die Erfindung bewirkt ein rundes, weich auslaufendes Lichtfeld, welches für photographische Zwecke hervorragend einsetzbar ist.

**Fig. 6**

EP 1 517 160 A2

**Beschreibung**

Wird zudem als Beleuchtungsmittel eine Entladungslampe gewählt, so treten im randseitigen Bereich des Lichtfelds Verfärbungen auf, welche je nach Entladungslampentyp unterschiedliche Farbe haben können.

Der Erfindung liegt das technische Problem zugrunde, eine Streuscheibe bereitzustellen, welche ein gleichmäßig rundes Lichtfeld erzeugt. Weiterhin soll die Streuscheibe ein Lichtfeld mit vorgebbarem Gradienten der Beleuchtungsstärke bereitstellen, d. h. das Lichtfeld soll zum Rand hin wählbar weich oder hart auslaufen.

Die Lösung dieses technischen Problems erfolgt durch die Merkmale der unabhängigen Ansprüche. Vorteilhafte Weiterbildungen werden durch die abhängigen Ansprüche angegeben.

Erfindungsgemäß wurde erkannt, dass die zentrale Ursache für das nicht runde Lichtfeld bei der Streuscheibe gemäß EP 0 961 136 A2 die regelmäßige Anordnung der Facetten ist. Die Regelmäßigkeit der Facetten artikuliert sich hierbei in der gleichen Form, Größe, und Orientierung der Facetten. Da das mit der Streuscheibe auf eine Fläche gerichtete Licht letztlich eine Superposition der sechseckigen Lichtfelder der einzelnen Facetten ist, wird das Lichtfeld der EP 0 961 136 A2 insofern selbst sechseckig.

Aufbauend auf dieser Erkenntnis besteht der neue Ansatz darin, von der regelmäßigen Anordnung der Facetten abzuweichen. Dies geschieht dadurch, dass eine Streuscheibe bereitgestellt wird, die einen transparenten Grundkörper mit einer ersten Oberfläche aufweist, wobei die erste Oberfläche in Facetten unterteilt ist, und bei der jeder Facette eine Erhebung oder Vertiefung mit einer zweiten, gewölbt ausgebildeten Oberfläche zugeordnet ist, wobei die Facetten unterschiedliche geometrische Formen annehmen.

Unter einer Facette im Sinne der Erfindung soll eine Fläche verstanden werden, die von der Randkontur der jeweiligen geometrischen Form aufgespannt wird. Je nach Ausbildung der ersten Oberfläche, d.h. der Oberfläche des Grundkörpers der Streuscheibe, als ebene oder gewölbte Fläche kann die Facette, welche durch die geometrischen Formen aufgespannt wird, ebenfalls eben oder gewölbt sein.

Die der Facette zugeordneten Erhebung oder Vertiefung stellt ein Element der Streuscheibe dar. Die Erhebung oder Vertiefung besitzt die Facette als Grundfläche und befindet sich zumindest im wesentlichen oberhalb oder unterhalb dieser Grundfläche. Die Erhebung oder Vertiefung wirkt im Beleuchtungsfall als Linse.

Durch die erfindungsgemäße Lösung kommt es zu einer Superposition einer Vielzahl unterschiedlich konturierter Lichtfelder und damit wunschgemäß zu einem runden Lichtfeld. Abhängig von der jeweiligen Facettenkonfiguration und der Beschaffenheit der den Facetten zugeordneten Erhebungen oder Vertiefungen lässt sich ein Lichtfeld mit einem wählbar Gradienten der Beleuchtungsstärke bereitstellen, bzw. ein solches das vorgebbar weich oder hart ausläuft.

Ein weich auslaufendes Lichtfeld ist ein solches mit einem geringen Gradienten der Beleuchtungsstärke zum Rand des Lichtfeldes hin. Umgekehrt führt ein starker Gradient der Beleuchtungsstärke am Rand des Lichtfeldes zu einem hart auslaufenden Lichtfeld.

Ein weiterer erzielter Vorteil besteht darin, dass mit der neuen Facettenkonfiguration randseitige Verfärbungen beim Einsatz von Entladungslampen vermieden werden.

Um die Unterschiedlichkeit der einzelnen zur Superposition beitragenden Lichtfelder zu erhöhen und darüber die oben genannten Vorteile zu erzielen, können verschiedene Maßnahmen ergriffen werden.

So kann vorgesehen sein, dass die Facetten eine polygonale Randkontur aufweisen. Hierbei ist die Eckenzahl der Polygone variabel. Die Facetten mit polygonaler Randkontur sollten die Oberfläche vollständig bedecken, da ansonsten lokal keine Streuwirkung gegeben ist. Dies könnte ggf. dem Wunsch nach einer gleichmäßigen Ausleuchtung zuwiderlaufen.

Weiterhin können auch Streuscheiben bereitgestellt werden, bei denen die Facetten unterschiedliche Flächeninhalte aufweisen.

Als Polygone können Drei-, Vier-, Fünf-, Sechs- und/oder Sieben-Ecke gewählt werden. Die Verbindungsstrecken zwischen benachbarten Ecken der Polygone können gerade oder gebogene Linien sein.

Als weitere Folge der Unregelmäßigkeit der Facetten ergibt sich, dass diese unterschiedliche Orientierungen aufweisen.

Eine weitere Maßnahme, mit der man sich dem Ziel runder Lichtfelder, und hinsichtlich der Beleuchtungsstärke zum Rand hin weich oder hart auslaufender Lichtfelder nähert, ist die Wahl und ggf. Variation der jeweiligen Wölbung der Erhebungen oder Vertiefungen. Die Wölbung kann sphärisch sein, und die Erhebung bzw. Vertiefung entsprechend kalottenförmig ausgebildet sein. Alternativ kann die Wölbung asphärisch gewählt werden.

Weiterhin besteht zur Gewährleistung des o.g. Ziels die Möglichkeit, die Tiefe der Ausnehmungen bzw. die Höhe der Erhebungen zu variieren.

Aus den vorstehenden Ausführungen ergibt sich, dass die aufgeführten Maßnahmen alternativ oder kumulativ vorgesehen werden können.

Zur praktischen Umsetzung der vorstehend genannten Lösung ist in einer ersten Lösungsvariante eine Streuscheibe vorgesehen, die einen transparenten Grundkörper mit einer ersten Oberfläche aufweist, wobei die erste Oberfläche in Facetten unterteilt ist, und bei der jeder Facette eine Erhebung oder Vertiefung mit einer zweiten, gewölbt ausgebildeten Oberfläche zugeordnet ist, und bei dem die Scheitelpunkte S der Erhebungen oder Vertiefungen entlang einer Spirale angeordnet sind.

Der Scheitelpunkt S der Erhebung oder Vertiefung sei definiert als Schnittpunkt der durch den Facettenschwerpunkt hindurchtretenden Oberflächennormale der Facette mit der gewölbten Oberfläche der Erhebung oder Vertiefung.

Nachfolgend soll beispielhaft eine Möglichkeit näher erläutert werden, wie eine derartige Streuscheibe gefertigt werden kann.

Das Grundmaterial der Streuscheibe, vorzugsweise Glas, wird in einem Umformprozess verarbeitet. Dabei wird das zähflüssige, heiße Grundmaterial in das Formwerkzeug eingeführt. Unter Druck füllt das Grundmaterial den Hohlraum des Formwerkzeuges aus und bildet die Geometrie des Formwerkzeuges als Negativ ab. Der Umformprozess dauert solange, bis das Grundmaterial sich abgekühlt und hat und ohne Deformation aus dem Formwerkzeug entnommen werden kann.

Die zur Anfertigung der Streuscheiben benötigten Formwerkzeuge, die wahlweise mit Erhöhungen und/oder Vertiefungen versehen sind, werden mittels Radiusfräser auf CNC-gesteuerten Werkzeugmaschinen hergestellt.

Werden in das Formwerkzeug zwei Vertiefungen hinreichend dicht nebeneinander eingebracht, so verbleibt beim Einsatz eines Kugelfräsers ein stegförmiger Rand zwischen den beiden Vertiefungen. Sind die benachbarten Vertiefungen gleich tief, und weisen sie den gleichen Radius auf, so ist ihr gemeinsamer Rand in einer Aufsicht linear. Besitzt eine Vertiefung sechs angrenzende Vertiefungen als Nachbarn, so kann sich für diese Vertiefung eine Berandung ergeben, die aus insgesamt sechs linearen stegförmigen Rändern besteht. In einer Aufsicht besitzt diese Vertiefung somit eine regelmäßige sechseckige Randkontur. Abhängig von der genauen Lage und der Zahl der benachbarten Vertiefungen ergibt sich im allgemeinen Fall eine Vertiefung mit einer polygonalen Randkontur.

Sind bei zwei benachbarten Vertiefungen der Radius und/oder die Tiefe der Ausfräsung unterschiedlich, so ist im allgemeinen der gemeinsame Rand gekrümmt, und es ergeben sich für die Vertiefungen Ränder die in einer Aufsicht unterschiedliche geometrische Formen annehmen.

Im Regelfall wird angestrebt, dass die Facetten die Oberfläche der Streuscheibe vollständig bedecken. In diesem Fall weist die Oberfläche des Formwerkzeugs eine flächendeckende Anordnung von Vertiefungen auf welche jeweils über eine polygonale Randkontur verfügen.

Selbstverständlich können aus ästhetischen oder technischen Gründen auch gewölbte Grundkörper für die Streuscheibe vorgesehen sein. In diesem Fall ist eine entsprechend gewölbte Oberfläche des Formwerkzeugs zu wählen. So kann der Grundkörper, und hierzu entsprechend das Formwerkzeug, sphärisch gewölbt sein. In diesem Fall wäre der Fräser mit seiner Rotationsachse parallel zum Radiusvektor der Kalotte auszurichten.

Durch die Anordnung der Scheitelpunkte S entlang einer Spirale entsteht eine Vielzahl von unregelmäßig angeordneten Facetten, mit welchen wunschgemäß ein rundes Lichtfeld geschaffen wird, welches bei Entladungslampen im Randbereich keine Verfärbungen aufweist, und dessen Gradient der Beleuchtungsstärke vorgegeben werden kann.

Die Höhe der Erhebungen bzw. Vertiefungen kann über die Streuscheibe hinweg variiert werden, so dass die Erhebungen und Vertiefungen unterschiedlich hoch bzw. tief ausfallen. Auch dies trägt zum Ziel bei, ein rundes und mehr oder weniger weich oder hart auslaufendes Lichtfeld bereitzustellen.

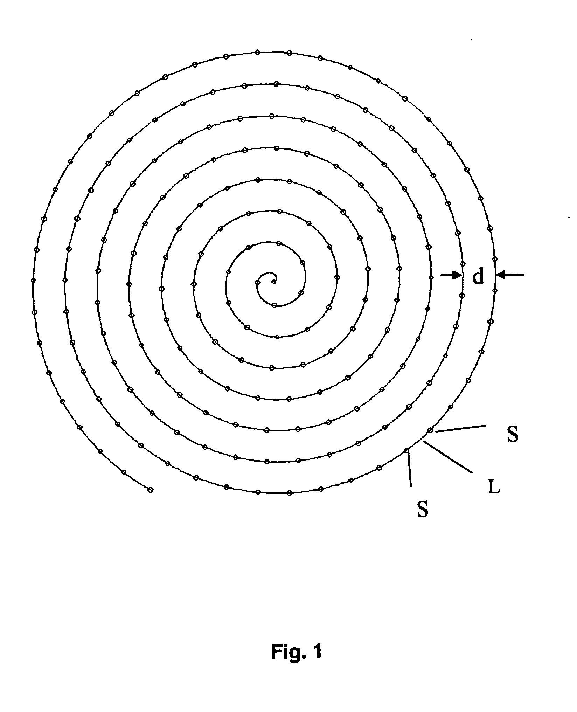

In einer Ausgestaltung der Streuscheibe befinden sich die Scheitelpunkte S auf einer Archimedischen Spirale, vgl. Fig. 1. Die Gleichung dieser Spirale in Polarkoordinaten *(r, φ)* lautet

$$r = \frac{d}{2\pi} \cdot \varphi \quad (\varphi = 0 \dots 2\pi \dots 4\pi \dots).$$

Das Zentrum (0, 0) des Koordinatensystems ist hierbei der im Inneren der Spirale befindliche Startpunkt. Die Bogenlänge L zwischen zwei benachbarten Punkte $S_1$ und $S_2$ ist dann bei einem Abstand der Spiralenwindungen.

$$L = \frac{d}{4\pi} \cdot \left[ \left( \varphi_2 \sqrt{\varphi_2{}^2 + 1} + Arsh\,\varphi_2 \right) - \left( \varphi_1 \sqrt{\varphi_1{}^2 + 1} + Arsh\,\varphi_1 \right) \right]$$

Die einzelnen Punkte $S_1$, $S_2$ ... erhält man durch fortgesetztes Abtragen der konstanten Bogenlänge L längs der Spirale von innen nach außen.

Die Scheitelpunkte können äquidistant zueinander angeordnet sein. Neben der äquidistanten Anordnung der Scheitelpunkte ist auch eine variable Bogenlänge L möglich. So kann eine von innen nach außen zunehmende Bogenlänge L gewählt werden. Auf diese Weise erhält man im Inneren der Streuscheibe kleine Facetten mit Erhebungen geringer Höhe bzw. mit Vertiefungen geringer Tiefe, und somit eine kleine Streuwirkung. Zum Rand hin werden die Facetten größer, die Höhe der Erhebungen bzw. die Tiefe der Vertiefungen wird größer und die Streuwirkung wird ebenfalls größer. Das Lichtfeld weist dann einen eher kleinen Halbstreuwinkel mit recht großer Beleuchtungsstärke im Zentrum auf. Im Gegensatz hierzu wäre bei konstantem L die Beleuchtungsstärke eher plateauförmig und weich auslaufend.

Die vorstehend genannten Maßnahmen, welche alternativ und ggf. kumulativ ergriffen werden können, erlauben es, auf vielfältige Weise, die Streuscheibe an das jeweilige Beleuchtungssystem, zum Beispiel den jeweiligen Reflektor, anzupassen. So kann durch die Wahl des Spiralentyps, des Werts der Bogenlänge L, aber auch durch Variation oder Konstanz der Bogenlänge eine Anpassung an einen Reflektor erfolgen. Diese Maßnahmen ermöglichen es, das Lichtfeld in vorgegebenen Bereichen des Beleuchtungssystems zu beeinflussen, es lokal zu verstärken oder zu schwächen, und erlauben somit auf vielfältige Weise, das Lichtfeld zu optimieren.

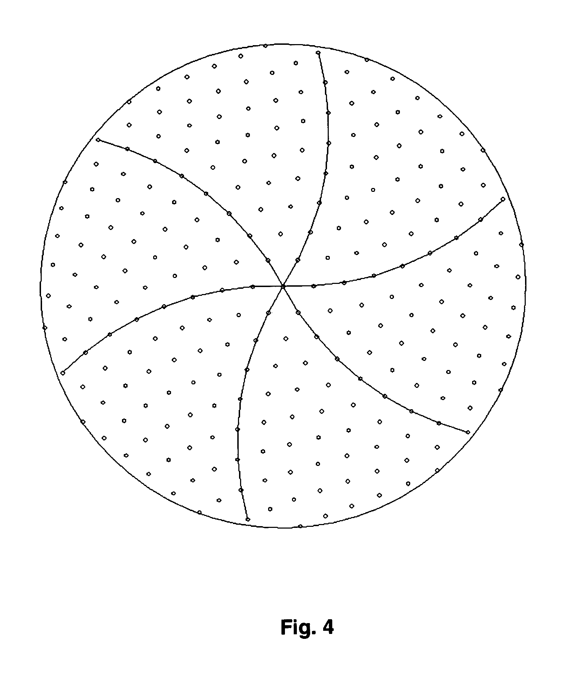

In einer zweiten Lösungsvariante, vgl. Fig. 4, ist eine Streuscheibe vorgesehen, die einen transparenten Grundkörper mit einer ersten Oberfläche aufweist, wobei die erste Oberfläche in Facetten unterteilt ist, und bei der jeder Facette eine Erhebung oder Vertiefung mit einer zweiten, gewölbt ausgebildeten Oberfläche zugeordnet ist, und bei der die Scheitelpunkte der Erhebungen und/oder Vertiefungen dadurch charakterisiert sind, dass sich ihre Koordinaten $(x_S, y_S)$ aus den Koordinaten $(x_P, y_P)$ aller Punkte P, welche eine Anordnung von Facetten mit regelmäßiger sechseckiger Randkontur bilden, durch Verdrehung um einen Winkel δ um ein Zentrum (0,0) ergeben.

Zur Erläuterung dieser Lösung sei zunächst dargestellt, wie eine Anordnung von Facetten mit regelmäßiger sechseckiger Randkontur mathematisch beschreibbar ist. Die Anordnung kann dargestellt werden aus drei Systemen jeweils zueinander gleichabständiger Linien, wobei jedes System gegenüber dem Nachbarsystem um 60° verdreht ist, und deren Linien durch die nachfolgenden Gleichungen beschrieben werden:

$$y = i \cdot \frac{3}{4}D$$

$$y = \tan 60° \cdot x + i \cdot \frac{3}{4} \cdot \frac{D}{\cos 120°}$$

$$y = \tan 120° \cdot x + i \cdot \frac{3}{4} \cdot \frac{D}{\cos 120°}.$$

Hierbei ist D die Facettendiagonale. Diese drei Gleichungen mögen nachfolgend als das Gleichungssystem 1 bezeichnet werden. Die erste Gleichung steht für einen Satz von horizontal ausgerichteten Linien. Die zweite Gleichung beschreibt einen Satz von Geraden mit positiver Steigung von tan 60°, und die dritte Gleichung einen Satz von Geraden mit negativer Steigung von tan 120°. $i$ ist ein Index mit

$$i = -i_A, -i_A + 1, ...., -1, 0, 1, .... i_E - 1, i_E \,,$$

wobei $i_A$ und $i_E$ ganze positive Zahlen sind.

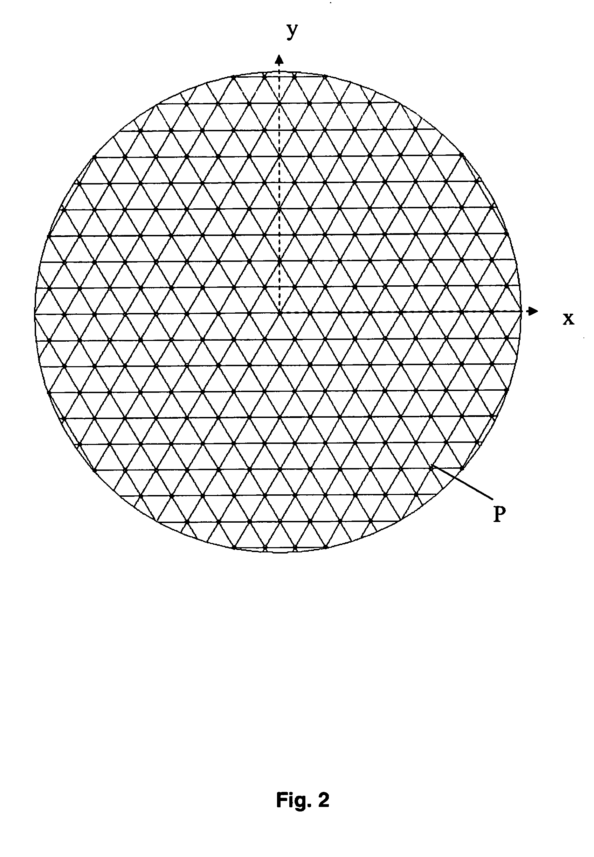

Diese drei Liniensysteme bilden Schnittpunkte P, die in der Fig. 2 dargestellt sind. Die Schnittpunkte, welche in einer Ebene liegen, haben hierbei die Koordinaten $(x_P, y_P)$ mit x als horizontale und y als vertikale Achse. An jeden Punkt P grenzen in Fig. 2 sechs Dreiecke, die gemeinsam eine Facette bilden welche eine regelmäßige sechseckige Randkontur aufweist.

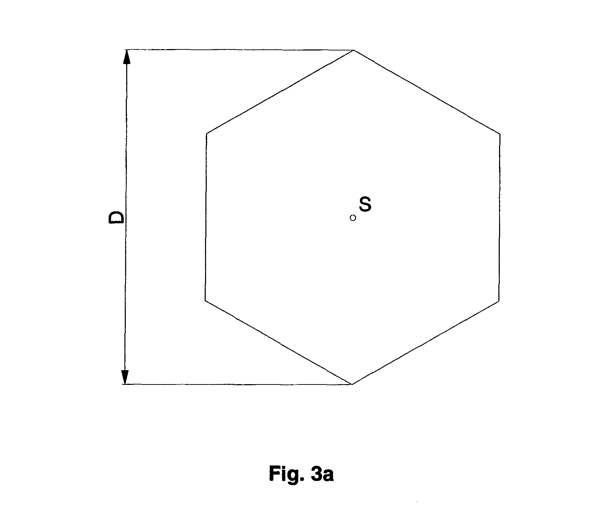

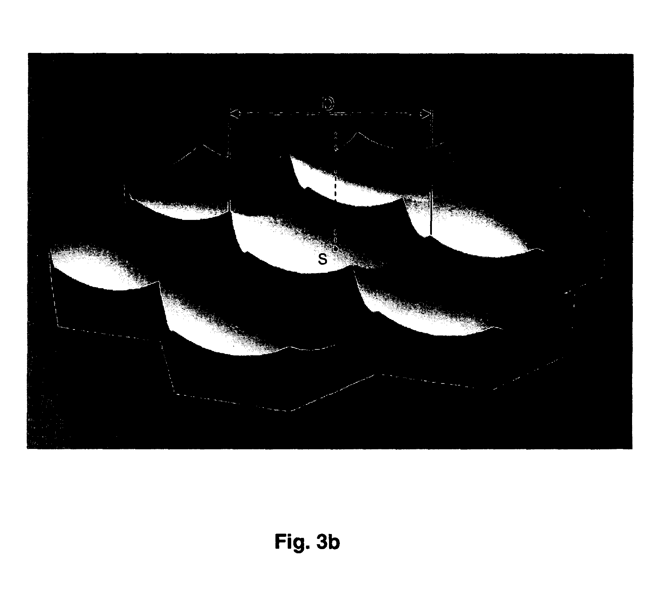

Fig. 3a zeigt eine derartige Facette mit Diagonale D in einer Aufsicht. Fig. 3b zeigt hierzu entsprechend einen Ausschnitt aus einer Streuscheibe mit gewölbten Ausnehmungen mit Scheitelpunkt S. Zu jeder Ausnehmung gehört eine sechseckige Randkontur.

Bezeichnet man die Koordinaten eines derartigen Schnittpunktes P mit $(x_P, y_P)$ unter Heranziehung kartesischer Koordinaten bzw. $(r, \varphi)$ bei Heranziehung von Polarkoordinaten, so kann eine Verdrehung dadurch erfolgen, dass folgende Transformation durchgeführt wird:

$$r = \sqrt{x_p^2 + y_p^2}$$

$$\varphi = \arctan\left(\frac{y_p}{x_p}\right)$$

$$N = \frac{r}{D \cdot \cos 30^\circ}$$

$$X' = \frac{D\cos 30^\circ}{2}\left(\frac{\sin((2N-1)\delta)}{\sin\delta} + 1\right)$$

$$Y' = \frac{D\cos 30^\circ}{2}\left(\frac{1}{\tan\vartheta} - \frac{\cos((2N-1)\delta)}{\sin\delta}\right)$$

$$R' = \sqrt{X'^2 + Y'^2}$$

$$\varphi' = \arctan\left(\frac{Y'}{X'}\right)$$

$$x_P' = R'\cdot\cos(\varphi+\varphi')$$

$$y_P' = R'\cdot\sin(\varphi + \varphi')$$

Diese neun Gleichungen mögen nachfolgend als das Gleichungssystem 2 bezeichnet werden, wobei N, X', Y', R' und $\varphi'$ rechnerische Zwischengrößen darstellen.

Die Ausgangskoordinaten ($x_P$, $y_P$) werden somit auf Endkoordinaten ($x_P'$, $y_P'$) transformiert. Das mathematische Ergebnis kann man sich anschaulich dadurch vorstellen, als hätte man eine Streuscheibe aus einem elastischen Material, welche um einen Winkel $\delta$ tordiert wird. Dies zeigt Fig. 4, bei der die durchgezogenen Linien durch den Mittelpunkt die Tordierung veranschaulichen. Für den Grenzfall $\delta=0^\circ$ liegt wieder eine Anordnung von Facetten mit regelmäßiger sechseckiger Randkontur vor. Die Tordierung bewirkt im inneren Bereich eine kleinere Veränderung der Ausgangskoordinaten, und im Außenbereich eine große Veränderung. Es sei hervorgehoben, dass die Tordierung lediglich einer Veranschaulichung der mathematischen Transformation darstellt, und nicht wörtlich zu nehmen ist.

Bei der Transformation der Ausgangskoordinaten ($x_P$, $y_P$) in Endkoordinaten ($x_P'$, $y_P'$) erfährt jeder Punkt P eine Verschiebung um eine gewissen Bogenlänge L. Mit dem Abstand der Punkte P vom Zentrum (0,0) nimmt diese Bogenlänge zu. Sie kann linear zunehmen wie in Fig. 4 ersichtlich, oder die Zunahme kann mit einer Wurzel- oder Exponentialfunktion erfolgen.

Die Menge aller Punkte ($x_P'$, $y_P'$) befindet sich im Sinne der vorstehenden Ausführungen in einer Ebene. Dies setzt einen ebenen Grundkörper voraus. Sofern gewünscht kann jedoch auch ein gewölbter Grundkörper vorgesehen werden. In diesem Fall muss die Menge aller Punkte ($x_P'$, $y_P'$) noch auf geeignete Weise auf die gewölbte Fläche abgebildet werden.

Die x- und y-Koordinaten eines Punktes P und des zugehörigen Scheitelpunktes S sind identisch, d. h. $x_S' = x_P'$ und $y_S' = y_P'$. S und P unterscheiden sich bezüglich der z-Koordinaten, wobei die z-Achse senkrecht auf der Zeichenebene von Fig. 2 steht. Der Unterschied in der z-Koordinate repräsentiert die Höhe der Erhebung bzw. die Tiefe der Ausnehmung. Im einfachsten Fall unterscheiden sich die z-Koordinaten um einen festen Wert, so dass $z_S'=z_P'+const$. Allerdings kann, wie oben aufgeführt, die Höhe der Erhebungen bzw. die Tiefe der Erhebungen, und damit $|z_S' - z_P'|$, variabel gewählt werden.

Die Auswirkungen, die ein gewählter Transformations- bzw. Tordierungswinkel $\delta$ auf das sich ergebende Facettenbild hat, ist dabei von dem Verhältnis des Streuscheibendurchmessers zu der Facettendiagonalen D abhängig. Wird der Tordierungswinkel zu groß gewählt, so ist das Ergebnis eine nahezu glatte Fläche am Streuscheibenrand und damit eine verschwindende Streuung in diesen Bereichen. Insofern führt ein kleinerer Winkel $\delta$ zu einer weniger glatten Fläche im Außenbereich und zu besserer Streuung am Rand. Andererseits führt eine Verkleinerung von $\delta$ naturgemäß zu einer nur sehr geringen Veränderung in der regelmäßigen Anordnung der Facetten und damit zunehmend zu den vorgenannten Nachteilen einer regelmäßigen Facettenanordnung.

In einer vorteilhaften Weiterbildung ist der Winkel $\delta$ für die Transformation nicht konstant, sondern nimmt mit zunehmendem Abstand vom Zentrum zu. Insofern kann ein zu großes δ am Streuscheibenrand wunschgemäß vermieden werden, und dies bei ausreichender Streuwirkung im Inneren der Streuscheibe.

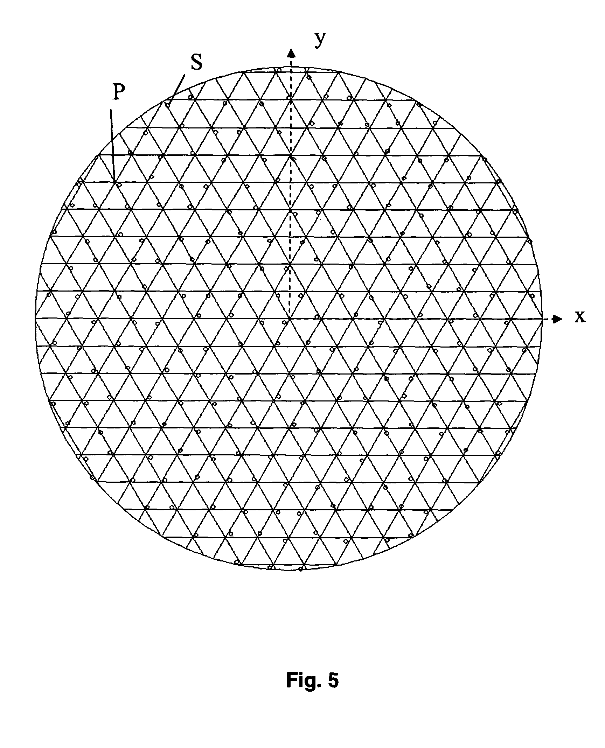

In einer dritten Lösungsvariante, vgl. Fig. 5, ist eine Streuscheibe vorgesehen, die einen transparenten Grundkörper mit einer ersten Oberfläche aufweist, wobei die erste Oberfläche in Facetten unterteilt ist, und bei dem jeder Facette eine Erhebung oder Vertiefung mit einer zweiten, gewölbt ausgebildeten Oberfläche zugeordnet ist, und bei der die Scheitelpunkte S der Erhebungen oder Vertiefungen dadurch charakterisiert sind, dass sich ihre Koordinaten $(x_S'', y_S'')$, aus den Koordinaten $(x_P, y_P)$ aller Punkte P, welche eine Anordnung von Facetten mit regelmäßiger sechseckiger Randkontur bilden, durch Zufallsvariierung mit Hilfe des Monte-Carlo-Verfahrens hervorgehen.

Die hierzu eingesetzten Zufallszahlen Z werden mit Hilfe des Monte-Carlo-Verfahrens im Bereich $0 \leq Z < 1$ variiert, wobei

$$x_S'' = x_P + (0{,}5 - Z)^*U$$

$$y_S'' = y_P + (0{,}5 - Z)^*V$$

Die Punkte P $(x_P, y_P, z_P)$ und S $(x_S'', y_S'', z_S'')$ unterscheiden sich wie bei der zweiten Lösungsvariante in der z-Koordinate, wobei $|z_S''-z_P|$ die Höhe der Erhebung bzw. die Tiefe der Ausnehmung repräsentiert.

Fig. 5 zeigt zum einen die Schnittpunkte P einer Anordnung von Facetten mit regelmäßiger sechseckiger Randkontur gemäß Gleichungssystem 1 mit den Koordinaten $(x_P, y_P)$ wie in Fig. 2, ergänzt um die über das Monte-Carlo-Verfahren erhaltenen Punkte S mit Koordinaten $(x_S'', y_S'')$ welche die Scheitelpunkte der Erhebungen bzw. Vertiefungen darstellen.

Vorteilhafterweise liegen die Parameter U und V im Bereich von ca. 5% bis ca. 20% der Facettendiagonalen D. Werden U bzw. V noch größer gewählt, so besteht zunehmend die Gefahr, dass der Grundkörper zwischen den Facetten Lücken aufweist.

Aus den vorstehenden Ausführungen ergibt sich, dass dem Fachmann mit den Lösungsvarianten eine Fülle von Parametern an die Hand gegeben wird, wie er das Lichtfeld unter Berücksichtigung des Beleuchtungssystems gestalten und anpassen kann. Insofern erlaubt der gewählte Ansatz der unterschiedlichen geometrischen Formen für die Facetten eine sehr vielfältige und variable Anpassung des Lichtfeldes an die jeweiligen Verhältnisse. Es tritt hinzu, dass zur Realisierung eines wunschgemäßen Lichtfeldes auch mehrere Möglichkeiten offen stehen, die sich im Design unterscheiden. Insofern erlauben es die Lösungsvarianten auch, hinsichtlich des ästhetischen Erscheinungsbildes optimierte Streuscheiben bereitzustellen.

Nachfolgend soll die Erfindung anhand von Ausführungsbeispielen näher erläutert werden.

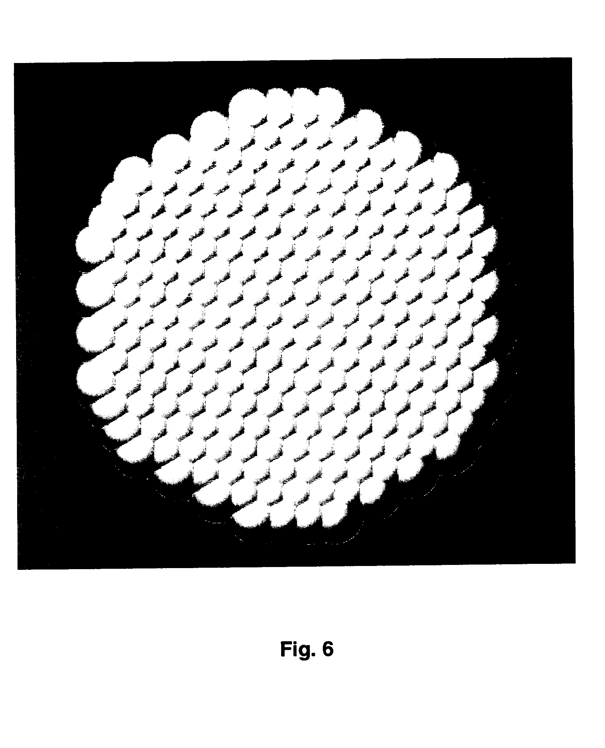

Fig. 6 zeigt eine Facettenanordnung ähnlich wie in der EP 0 961 136 A1. Die Streuscheibe hat einen Durchmesser von 138 mm und ist flächendeckend mit Facetten mit regelmäßiger sechseckiger Randkontur belegt. Jedes Sechseck hat eine Diagonale D von 10 mm. Zur Modellierung wurde das Gleichungssystem 1 mit $i_A$=9 und $i_E$=9 herangezogen. Jede Erhebung ist sphärisch gekrümmt, wobei der Krümmungsradius 10 mm beträgt.

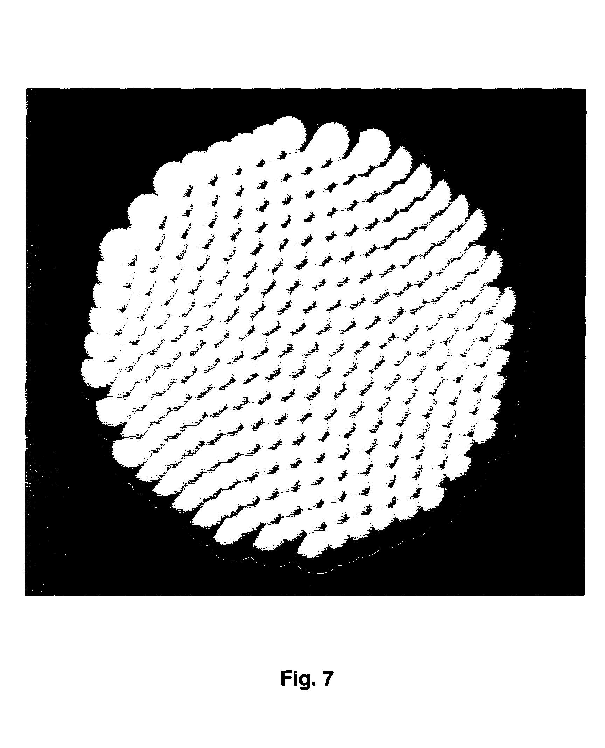

Fig. 7 zeigt in einer Aufsicht eine Ausführungsform, bei der die regelmäßige Anordnung gemäß Fig. 6 im Sinne der zweiten Lösungsvariante mit Hilfe des Gleichungssystems 2 um δ = 3° verdreht bzw. tordiert wurde. Man erkennt, dass die Facetten nunmehr unregelmäßig angeordnet sind. Die Facetten weisen nicht mehr alle die gleiche Form, sondern unterschiedliche Flächeninhalte und eine unterschiedliche Zahl von Ecken auf. Auch die Orientierungen der Facetten sind unterschiedlich.

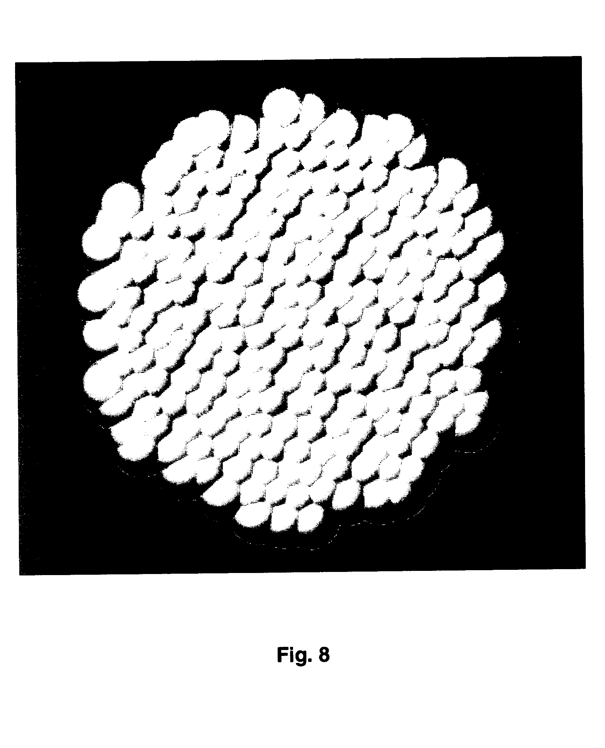

Fig. 8 zeigt ein Beispiel, bei der die Koordinaten der regelmäßigen Facettenanordnung gemäß Fig. 6 mittels des Monte-Carlo-Verfahrens zufallsvariiert wurde. Es war U=0,2 * D und V=0,2 * D. Mit D=10 mm ergibt sich damit U=V=2 mm. Auch hier sind die Facetten unterschiedlich konturiert und orientiert, und weichen optisch deutlich sichtbar von der regelmäßigen Anordnung gemäß Fig. 6 ab.

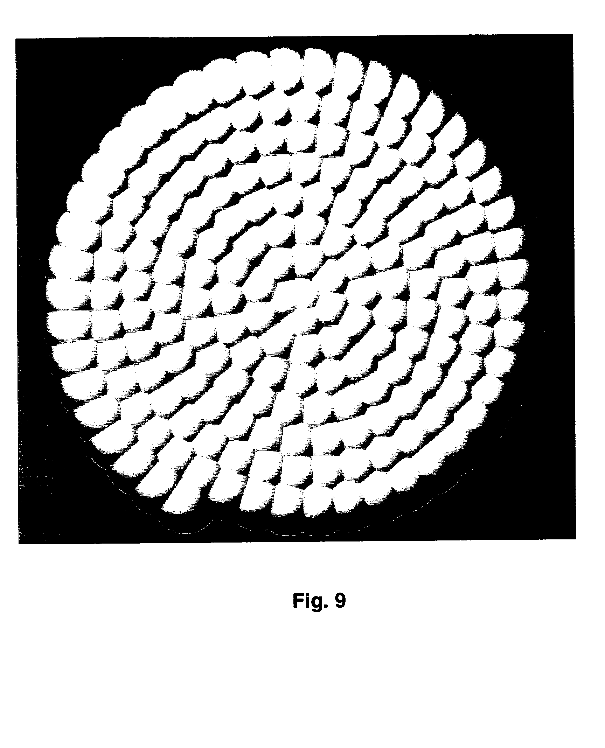

Fig. 9 zeigt eine Streuscheibe mit Durchmesser 138 mm, bei der die Scheitelpunkte auf einer Archimedischen Spirale angeordnet sind. Die Ausgangsfacette war regelmäßig sechseckig konturiert wie in Fig. 6, jedoch mit einer Diagonale D von 12 mm. Der Spiralenabstand d ist 9 mm, und die Bogenlänge L ist ebenfalls 9 mm. Jede sphärisch gewölbte Erhebung hat einen Krümmungsradius von 10 mm.

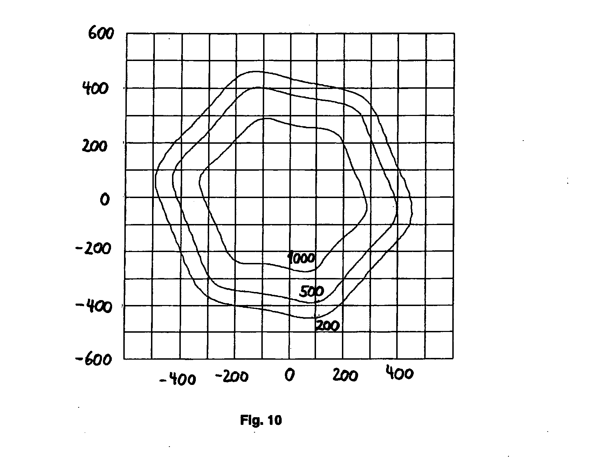

Fig. 10 zeigt eine so genannte Isoluxverteilung der xy-Ebene des Lichtfeldes, mit x als horizontaler und y als vertikaler Achse, für den Fall einer Leuchte mit einer Streuscheibe, deren Oberfläche mit einer regelmäßigen Facettenanordnung nach dem Gleichungssystem 1 ausgestattet ist, wie im Fall der EP 0 961 136 A2. Die Isoluxverteilung zeigt Werte konstanter Beleuchtungsstärke von 1000, 500 und 200 Lux. Die Werte konstanter Beleuchtungsstärke nehmen eine sechseckige Form an, d.h. das Lichtfeld ist insgesamt ausgeprägt sechseckig.

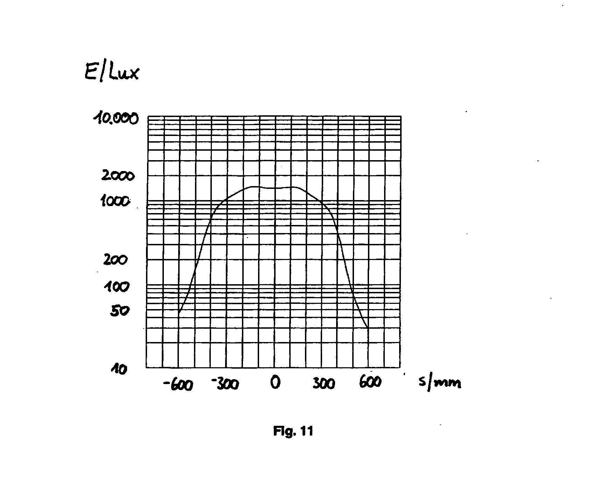

Fig. 11 zeigt für die gleiche Leuchte eine so genannte horizontale Beleuchtungsstärkeverteilung, also den Verlauf der Beleuchtungsstärke längs der horizontal ausgerichteten x-Achse wie bei der EP 0 961 136 A2. Die Beleuchtungsstärke weist einen zentralen plateauförmigen Bereich auf, und einen scharfkantigen Abfall zum Rand hin.

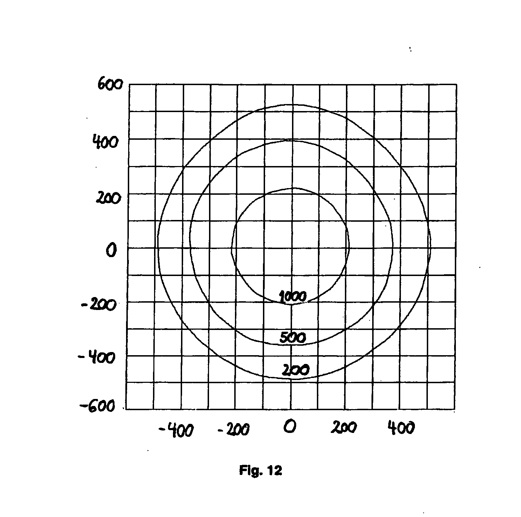

Fig. 12 zeigt das Lichtfeld der gleichen Leuchte wie bei Fig. 10, jedoch mit einer erfindungsgemäßen Streuscheibe. Die Linien konstanter Beleuchtungsstärke sind rund, das Lichtfeld in seiner Gesamtheit ebenfalls.

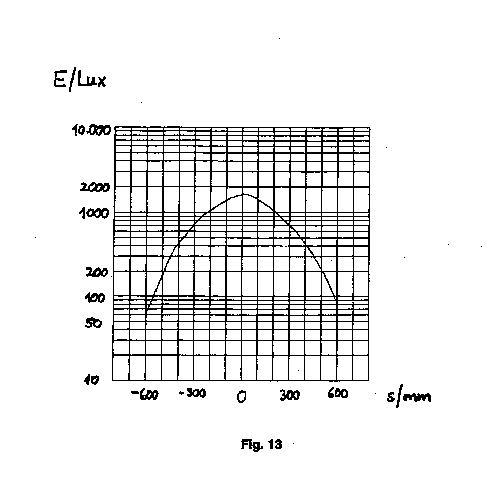

Fig. 13 zeigt in einer zu Fig. 11 korrespondierenden Darstellung das Ergebnis, wenn die Leuchte mit einer erfindungsgemäßen Streuscheibe ausgestattet ist. Der Verlauf der Beleuchtungsstärke ist glockenförmig, die Steigungsänderung erfolgt langsam, das Lichtfeld ist insofern weich auslaufend.

**Patentansprüche**

1. Streuscheibe, die einen transparenten Grundkörper (1) mit einer ersten Oberfläche (2) aufweist, wobei die erste Oberfläche (2) in Facetten (3) unterteilt ist, und bei der jeder Facette (3) eine Erhebung oder Vertiefung (4) mit einer zweiten, gewölbt ausgebildeten Oberfläche (5) zugeordnet ist,
**dadurch gekennzeichnet,**
**dass** die Facetten unterschiedliche geometrische Formen annehmen.

2. Streuscheibe nach Anspruch 1,
**dadurch gekennzeichnet,**
**dass** die Facetten eine polygonale Randkontur aufweisen.

3. Streuscheibe nach Anspruch 2,
**dadurch gekennzeichnet,**
**dass** die Facetten unterschiedliche Flächeninhalte aufweisen.

4. Streuscheibe nach Anspruch 2 oder 3,
**dadurch gekennzeichnet,**
**dass** die Facetten die Form eines Drei-, Vier-, Fünf-, Sechs- und/oder Sieben-Ecks annehmen.

5. Streuscheibe nach einem der Ansprüche 1 bis 4,
**dadurch gekennzeichnet,**
**dass** die Facetten unterschiedliche Orientierungen aufweisen.

6. Streuscheibe nach einem der Ansprüche 1 bis 5,
**dadurch gekennzeichnet,**
**dass** die Erhebungen oder Vertiefungen (4) kalottenförmig ausgebildet sind.

7. Streuscheibe nach einem der Ansprüche 1 bis 6,
**dadurch gekennzeichnet,**
**dass** die Höhe der Erhebungen und/oder die Tiefe der Vertiefungen unterschiedlich gewählt sind.

8. Streuscheibe nach dem Oberbegriff von Anspruch 1,
**dadurch gekennzeichnet,**
**dass** die jeweiligen Scheitelpunkte (S) der Erhebungen oder Vertiefungen entlang einer Spirale angeordnet sind.

9. Streuscheibe nach Anspruch 8,
**dadurch gekennzeichnet,**
**dass** die Scheitelpunkte (S) auf einer Archimedischen Spirale angeordnet sind.

10. Streuscheibe nach Anspruch 8 oder 9,
**dadurch gekennzeichnet,**
**dass** die Bogenlänge (L) zwischen zwei benachbarten Scheitelpunkten (S) entlang der Spirale nahezu äquidistant ist.

11. Streuscheibe nach Anspruch 8 oder 9,
**dadurch gekennzeichnet,**
**dass** die Bogenlänge (L) zwischen zwei benachbarten Scheitelpunkten (S) entlang der Spirale variabel gestaltet ist.

**12.** Streuscheibe nach einem der Ansprüche 8 bis 11,
**dadurch gekennzeichnet,**
**dass** die Höhe der Erhebungen und/oder die Tiefe der Vertiefungen unterschiedlich gewählt sind.

**13.** Streuscheibe nach dem Oberbegriff von Anspruch 1,
**dadurch gekennzeichnet,**
**dass** die Scheitelpunkte (S) der Erhebungen und/oder Vertiefungen (4) dadurch charakterisiert sind, dass sich ihre Koordinaten ($x_S'$, $y_S'$) aus den Koordinaten ($x_P$, $y_P$) aller Punkte (P), welche eine Anordnung von Facetten mit regelmäßiger sechseckiger Randkontur definieren, durch Verdrehung um einen Winkel $\delta$ um ein Zentrum (0,0) ergeben.

**14.** Streuscheibe nach Anspruch 13,
**dadurch gekennzeichnet,**
**dass** der Winkel $\delta$ mit zunehmendem Abstand vom Zentrum zunimmt.

**15.** Streuscheibe nach Anspruch 14,
**dadurch gekennzeichnet,**
**dass** der Winkel $\delta$ linear oder mit einer Wurzel- oder Exponentialfunktion zunimmt.

**16.** Streuscheibe nach einem der Ansprüche 13 bis 15,
**dadurch gekennzeichnet,**
**dass** die Höhe der Erhebungen und/oder die Tiefe der Vertiefungen unterschiedlich sind.

**17.** Streuscheibe nach dem Oberbegriff von Anspruch 1,
**dadurch gekennzeichnet,**
**dass** die Scheitelpunkte (S) der Erhebungen oder Vertiefungen dadurch charakterisiert sind, dass sich ihre Koordinaten ($x_S''$, $y_S''$), aus den Koordinaten ($x_P$, $y_P$) aller Punkte (P), welche eine Anordnung von Facetten mit regelmäßiger sechseckiger Randkontur definieren, durch Zufallsvariierung mit Hilfe des Monte-Carlo-Verfahrens hervorgehen.

**18.** Streuscheibe nach Anspruch 16,
**dadurch gekennzeichnet,**
**dass** die Höhe der Erhebungen und/oder die Tiefe
der Vertiefungen unterschiedlich sind.

**Fig. 1**

**Fig. 2**

**Fig. 3a**

**Fig. 3b**

**Fig. 4**

Fig. 5

Fig. 6

Fig. 7

Fig. 8

Fig. 9

**Fig. 10**

Fig. 11

**Fig. 12**

Fig. 13